(19) Europäisches Patentamt

European Patent Office

Office européen des brevets

(11) Veröffentlichungsnummer: **0 325 734 B1**

(12) **EUROPÄISCHE PATENTSCHRIFT**

(45) Veröffentlichungstag der Patentschrift: **30.12.92**

(51) Int. Cl.5: **A61C 13/225**

(21) Anmeldenummer: **88119954.1**

(22) Anmeldetag: **30.11.88**

(54) **Zahnersatz mit einer reibschlüssigen Verbindung.**

(30) Priorität: **23.01.88 DE 3801994**

(43) Veröffentlichungstag der Anmeldung:
**02.08.89 Patentblatt 89/31**

(45) Bekanntmachung des Hinweises auf die
Patenterteilung:
**30.12.92 Patentblatt 92/53**

(84) Benannte Vertragsstaaten:
**AT CH FR IT LI SE**

(56) Entgegenhaltungen:
**DE-A- 3 540 049**
**DE-U- 8 617 972**

(73) Patentinhaber: **fischerwerke Artur Fischer GmbH & Co. KG**
**Weinhalde 14 - 18**
**W-7244 Waldachtal 3/Tumlingen(DE)**

(72) Erfinder: **Fischer, Artur, Prof.Dr.h.c.**
**Weinhalde 34**
**W-7244 Waldachtal 3/Tumlingen(DE)**
Erfinder: **Weber, H., Prof.Dr.**
**Zentrum für ZMK Osianderstrasse 2-8**
**W-7400 Tübingen(DE)**
Erfinder: **Rübeling, Günter**
**Rübeling Dental-Labor GMBH Postfach 10 07**
**W-2800 Bremerhaven(DE)**

(74) Vertreter: **Ott, Elmar, Dipl.-Ing.**
**fischerwerke Artur Fischer GmbH & Co KG**
**Weinhalde 14-18**
**W-7244 Waldachtal 3/Tumlingen(DE)**

## Beschreibung

Die Erfindung betrifft einen Zahnersatz mit einer reibschlüssigen Verbindung gemäß der Gattung des Hauptanspruches.

Als lösbare Verbindung für Zahnersatz werden üblicherweise metallische Geschiebe verwendet. Geschiebe auf Metallbasis müssen in der Regel gelötet, geschweißt oder angegossen werden. Der Einbau der Geschiebe erfordert einen beträchtlichen Zeitaufwand und durch die Verwendung metallischer Geschiebe wird die Legierungsvielfalt in der Mundhöhle vergrößert, wodurch in entsprechender Weise das Risiko für elektrochemische Reaktionen, begleitet von lokalen Gewebsreaktionen oder Allergien, erhöht wird. Auch stellt der unter Funktion eintretende Friktionsverlust bei metallenen Geschieben/Teleskopen häufig ein Problem dar, welches nicht oder nur mit großem finanziellen Aufwand gelöst werden kann.

Aus der EP-A-0 254 027 ist ein Zahnprothesengeschiebe bekannt, welches eine Führungsmatrize und einer in dieselbe einschiebbare Patrize besitzt. Der Aufbau dieses Zahnprothesengeschiebes ist sehr aufwendig und erfordert Einstellelemente, die zur Einstellung der Passung und der Friktionskraft dienen.

Aus der DE-OS 35 40 049 ist eine Geschiebeverbindung bekannt, bei der die Verbindung zwischen Patrizenteil und Matrizenteil über einen nachträglich eingebrachten aushärtbaren Kunststoff hergestellt wird. Die Geschiebeteile lassen sich klar mit entsprechend großen Toleranzen fertigen, jedoch ist das nachträgliche Einbringen eines aushärtbaren Kunststoffes problematisch. Diese bekannte Geschiebeverbindung benötigt viel Platz, weshalb die Anwendungsmöglichkeiten auch dadurch begrenzt sind. Auch ist der dazu notwendige dauerhafte Verbund zwischen Kunststoff und Metall nicht ausreichend gesichert.

Der Erfindung liegt die Aufgabe zugrunde, einen Zahnersatz mit einer reibschlüssigen Verbindung zu schaffen, wobei die Verbindung möglichst wenig Raum beanspruchen und dennoch kostengünstig herstellbar sein soll.

Die Lösung dieser Aufgabe wird bei einem Zahnersatz der eingangs genannten Gattung durch die im Hauptanspruch angegebenen Merkmale erhalten. Es werden an der Außenfläche der primären Teleskopkrone (Innenteleskop) und innen an der auf dieser aufsitzenden Krone (Außenteleskop) eines Zahnersatzteiles korrespondierende Nuten angebracht, in die ein elastisches Friktionselement eingesetzt wird. Das Friktionselement ist dabei so in die Nuten eingepreßt, daß die Reibung zwischen Friktionselement und Nuteninnenflächen so groß ist, daß der Zahnersatz sicher im Mund fixiert ist. Die Reibung in den Nuten ist dabei dadurch jedoch nur so groß, daß ein Herausnehmen des Zahnersatzes noch möglich ist. Als Friktionselement wird vorzugsweise ein Profilstift aus Polyamid verwendet, der aufgrund seines x-förmigen Profil in Hinterschneidungen der Nuten eingreift. Ein solches Profil kann im Querschnitt z. B. als bogenartig, schwalbenwanzförmig oder triangulär bezeichnet werden.

Die gegenüberliegenden Nuten müssen nicht gleiche Querschnittsform haben. Es kann beispielsweise eine Nut im Querschnitt trapezförmig ausgebildet sein, während die andere, angrenzende Nut in der gegenüberliegenden Fläche einen halbkreisförmigen Querschnitt aufweist. Der halbkreisförmige Querschnitt wäre in diesem Fall an der Außenfläche der Teleskopkrone ausgebildet, während die trapezförmige Nut an der Innenfläche der aufgesetzten Krone ausgebildet wäre. Der Profilstift ist bei allen Ausführungsformen formschlüssig in der äußeren Krone gesichert.

Gemäß einer Weiterbildung ist vorgesehen, daß die Nutenlänge in der äußeren Krone des Zahnersatzteils größer ist als in der auf dem Zahnstumpf befindlichen Teleskopkrone.

Zur Herstellung der erfindungsgemäßen reibschlüssigen Verbindung wird das ansich bekannte Verfahren der Funkenerosion verwendet. Mittels entsprechend profilierter Elektroden lassen sich die Nuten an der Teleskopkrone und an der auf dieser sitzenden Krone in einem oder in zwei Arbeitsgängen einbringen. Die Kronen sind dabei auf einem Kiefermodell in der Sollposition angeordnet, so daß eine äußerst genaue Anordnung der Nuten und eine entsprechend genaue Verbindung hergestellt werden kann. Das Friktionselement muß dann nur noch in die Nuten eingeschoben und dessen überstehendes Ende abgelängt werden. Beim Herausnehmen des Zahnersatzes bleibt das Friktionselement als Patrize am Zahnersatz.

Vorteilhafte Weiterbildungen der Erfindung sind in den Unteransprüchen angegeben.

Die Erfindung wird nachfolgend anhand der Zeichnung näher erläutert.

Es zeigen:

Figur 1 — eine Teilansicht eines Zahnersatzteiles,

Figur 2 — die Anbringung einer Nut in einer Teleskopkrone und einer auf ihr aufgesetzten Krone eines Zahnersatzteiles mittels Funkenerosion,

Figur 3 — einen Querschnitt gemäß der Linie AB der in Figur 2 dargestellten Anordnung nach Einbringung der erforderlichen Verbindungsmuten,

Figur 4 — einen Teilquerschnitt mit anders profilierten Nuten,

Figur 5 bis 7 — unterschiedliche Ausführungsformen von Profilstiften zum Einsetzen in entsprechend profilierte Nuten,

Figur 8 bis 20 weitere Ausführungsbeispiele der Erfindung.

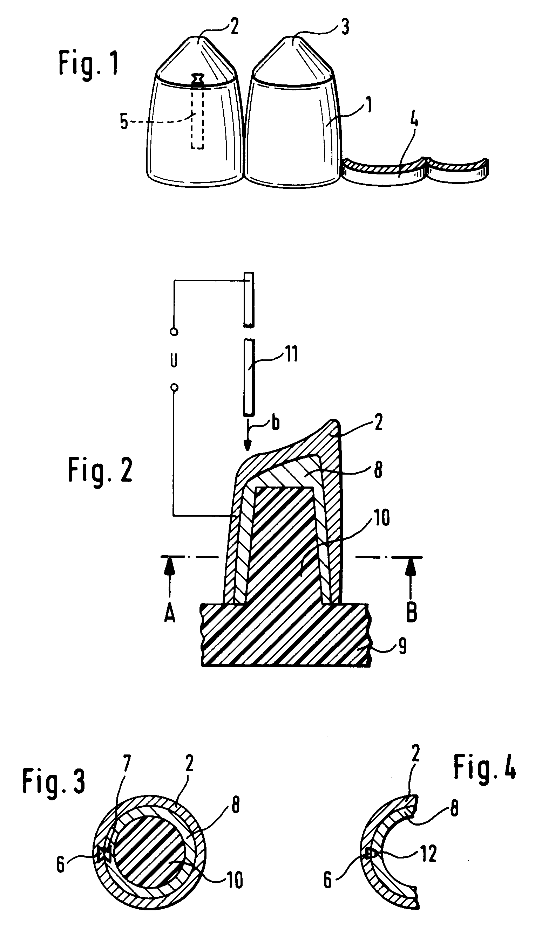

Das in Figur 1 teilweise dargestellte Zahnersatzteil 1 besitzt zwei miteinander verbundene Kronen 2, 3 und einem Bügel 4, der sich bis zu hier nicht dargestellten weiteren Kronen erstreckt.

In der Krone 2 ist ein elastisches einteiliges Friktionselement 5 eingesetzt, welches in entsprechend profilierte Nuten an der Krone 2 und an der darunter befindlichen Teleskopkrone eingreift. Die Position und die Form der Nuten 6, 7 sind im Querschnitt gemäß Figur 3 ersichtlich. Die Nut 6 ist mit einer Hinterschneidung in der Krone 2 vorgesehen, während die Nut 7 mit entsprechender Hinterschneidung in der Teleskopkrone 8 angebracht ist.

In Figur 2 ist die Anordnung eines Zahnmodells dargestellt, auf dessen Kieferkamm 9 mit Zahnstumpf 10 eine im Schnitt dargestellte Teleskopkrone 8 aufgesetzt ist. Auf der Teleskopkrone 8 sitzt die Krone 2 des Zahnersatzteils 1, wie es in Figur 1 dargestellt ist.

Zur Anbringung der Nuten 6, 7 (Figur 3) wird unter Anwendung der ansich bekannten Funkenerosion eine der Nutenform entsprechend profilierte Elektrode 11 entsprechend der Pfeilrichtung (b) abgelängt. Zwischen der Elektrode 11 und den metallischen Kronen 2, 8 wird von einem Funkenerosionsgenerator die hierzu erforderlich Spannung U angelegt. Beim Absenken der Elektrode 11 gemäß Pfeilrichtung (b) entsteht an der gewünschten Stelle im Bereich der Berührungsflächen an der Teleskopkrone 8 und der Krone 2 eine dem Profil der Elektrode 11 entsprechende Nut. Durch Verwendung einer im Querschnitt dreieckförmigen Elektrode kann durch zweimalige Anwendung der Funkenerosion ein aus den beiden Nuten 6 und 7 bestehendes Profil im Bereich der Berührungsflächen wie in Figur 3 dargestellt, hergestellt werden.

Nach Anwendung der Funkenerosion wird ein Friktionselement, welches vorzugsweise als Profilstab aus Polyamid ausgebildet ist, in die Doppelnut 6, 7 von oben entsprechend der Pfeilrichtung (b) eingesetzt. Das Profil des Profilstabes 5 (Figur 1) ist so an die Profilierung der Nuten 6, 7 angepaßt, daß zwischen Profilstab 5 und der Nut 6 bzw. der Nut 7 eine reibschlüssige Verbindung entsteht. Der eingesetzte Profilstab 5 kann oben bündig abgelängt werden. Eine zusätzliche Befestigung des Profilstabes 5 ist nicht erforderlich, da dieser alleine aufgrund der Reibungskraft in der Nut 6 gehalten wird.

Damit beim Herausnehmen des Zahnersatzteils 1 das Friktionselement (Profilstab 5) am Zahnersatzteil 1 verbleibt, sollte die Reibkraft in der Nut 6 größer sein als in der Nut 7. Dies kann dadurch erreicht werden, daß im Bereich der Nut 6 eine stärkere Pressung zwischen Profilstab 5 und Krone 12 auftritt als in der Nut 7. Die Andruckkräft können jedoch in beiden Nuten 6, 7 auch gleich groß sein, wenn die Nut 6 eine größere Länge aufweist als die Nut 7.

Die in Figur 3 dargestellte Doppelnut 6, 7 ist für die Aufnahme eines Profilstabes 5 gemäß Figur 1 geeignet.

In Figur 4 ist dagegen eine Doppelnut vorgesehen, die aus der hinterschnittenen Nut 6 in der Krone 2 und einer gerundeten Nut 12 in der Teleskopkrone 8 zusammengesetzt ist. Diese annähernd im Querschnitt dreieckförmige Doppelnut 6, 12 kann aufgrund der Reibung zwischen entsprechend profiliertem Profilstab und der Teleskopkrone 8 durchaus ausreichende Haltewerte für das Zahnersatzteil erzielen. Die dreieckförmige Doppelnut ist im übrigen besonders einfach in der Handhabung.

Es wird darauf hingewiesen, daß die Position der Nuten wegen ihrer kleinen Abmessungen den jeweiligen Anforderungen entsprechend gewählt werden kann. Die Nuten können auch interdental, seitlich oder an der der Mundhöhle zugewandten Seite des Zahnersatzteils angeordnet sein. Höhere Haltewerte können sofern erforderlich auch durch Anbringung zweier Doppelnuten an einer einzigen Krone erzielt werden.

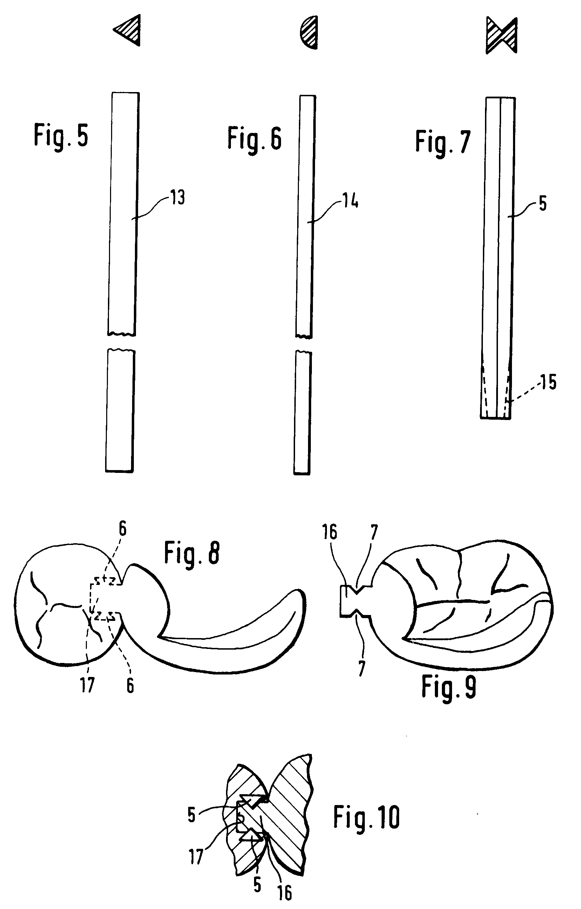

In den Figuren 5 bis 7 sind Profilstifte 13, 14 , 5 in der Seitenansicht und im Profil dargestellt. Anhand von Figur 7 ist angedeutet, daß der Profilstift 5 an seinem unteren Ende gemäß unterbrochener Linie 15 leicht konisch verjüngt sein kann. Eine derartige konische Verjüngung kann das Einführen des Profilstiftes 5 in die Doppelnut 6, 7 erleichtern.

Die in der Zeichnung dargestellten Ausführungsbeispiele verschiedener Profilformen können je nach Anwendungsfall den Anforderungen entsprechend abgewandelt werden. Entsprechendes gilt für die Querschnittsformen der Elektroden mit denen durch Anwendung der Funkenerosion die gewünschten Nutenprofile hergestellt werden.

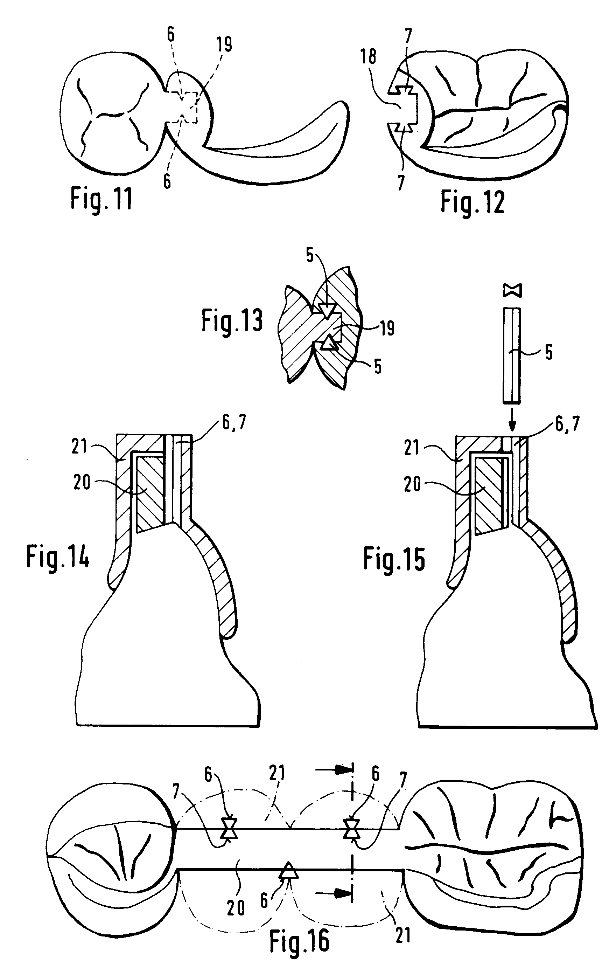

In den Figuren 8 bis 20 sind weitere Ausführungsbeispiele dargestellt, wobei die Figuren 8 bis 10 einen Zahnersatz zeigen, bei dem eine im Munde fixierte Brücke einen angeformten Block 16 besitzt, der in eine entsprechende Aussparung 17 eines herausnehmbaren Zahnersatzteils eingreift. Die Verbindung zwischen benachbarten Flächen erfolgt mittels Friktionselementen 5 die in entsprechende Nuten 6, 7 eingreifen .

In den Figuren 11 bis 13 ist eine entsprechende Ausführung gezeigt, wobei jedoch am herausnehmbaren Zahnersatzteil ein Block 19 angebracht ist, der in eine Aussparung 18 an einer Brücke eingreift.

In den Figuren 14 bis 16 ist ein Ausführungsbeispiel mit einem waagerecht verlaufenden Steg 20 gezeigt, den ein herausnehmbares Zahnersatzteil 21 übergreift. Zwischen Steg 20 und dem Zahnersatzteil 21 sind Nuten 6, 7 ausgebildet, in die entsprechende Friktionselemente eingreifen. Die elastischen Friktionselemente sind mit dem herausnehmbaren Zahnersatzteil 21 fest verbunden, wobei jedoch bei Bedarf ein Austausch der Friktionselemente dennoch möglich ist.

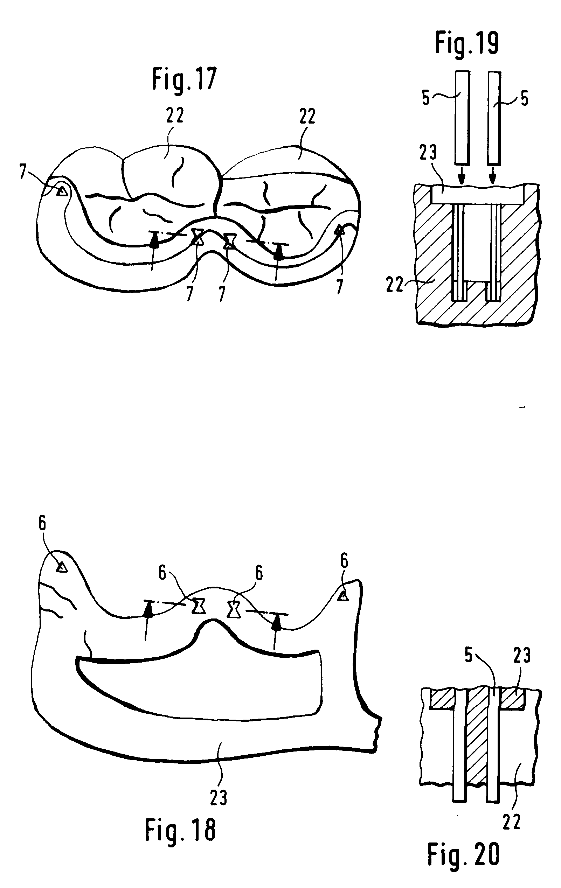

In Figur 17 ist ein Primärteil 22 mit zwei benachbarten Kronen dargestellt, an dem das in Figur 18 nur teilweise dargestellte Sekundärteil 23 verankert ist. Das Sekundärteil 23 bildet dabei das herausnehmbare Teil des Zahnersatzes. In Verbindung mit den Figuren 19 und 20 ist die Anordnung elastischer Friktionselemente 5 ersichtlich, die in Nuten 6, 7 eingreifen.

**Patentansprüche**

1. Zahnersatz mit einer reibschlüssigen Verbindung zwischen einer im Munde fixierten Teleskopkrone (8), einer Brücke oder dgl. und einer aufgesetzten, herausnehmbaren Krone (2) eines Zahnersatzteiles, **dadurch gekennzeichnet,** daß an den angrenzenden Flächen der Teleskopkrone (8) und der die Teleskopkrone (8) übergreifenden Krone (2) des Zahnersatzteiles (1) jeweils eine vertikale Nut (6, 7) ausgebildet ist, daß die beiden Nuten (6, 7) unmittelbar gegenüberliegen und durch ein in beide Nuten (6, 7) eingreifendes, elastisches einteiliges Friktionselement (5) in Verbindung stehen.

2. Zahnersatz nach Anspruch 1, **dadurch gekennzeichnet,** daß an den angrenzenden Flächen zwischen einer Krone oder Brücke und einem Geschiebe jeweils vertikale Nuten ausgebildet sind, die genau gegenüber liegen und durch ein eingreifendes elastisches Friktionselement verbunden sind.

3. Zahnersatz nach einem der Ansprüche 1 oder 2, **dadurch gekennzeichnet,** daß das Friktionselement ein Profilstift (5, 13, 14) aus Polyamid ist, dessen Querschnitt an den Querschnitt des durch beide Nuten gebildeten Nutenraum angepaßt ist.

4. Zahnersatz nach einem der vorhergehenden Ansprüche, **dadurch gekennzeichnet,** daß beide Nuten (6, 7) die gleiche Querschnittsform haben.

5. Zahnersatz nach einem der Ansprüche 1 bis 3, **dadurch gekennzeichnet,** daß die Nuten (6, 12) unterschiedliche Querschnitte haben.

6. Zahnersatz nach einem der Ansprüche 4 oder 5, **dadurch gekennzeichnet,** daß der Querschnitt trapezförmig und/oder dreieckig und/oder halbkreis- oder/und schalbenschwanzförmig ausgebildet ist.

7. Zahnersatz nach einem der vorhergehenden Ansprüche, **dadurch gekennzeichnet,** daß die Nutenlänge in der Krone (2) des Zahnersatzteiles (1) größer ist als in der auf dem Zahnstumpf (1) befindlichen Teleskopkrone (8).

8. Verfahren zur Herstellung einer reibschlüssigen Verbindung zwischen einer im Munde fixierten Teleskopkrone (8) und einer aufgesetzten herausnehmbaren Krone (2), **dadurch gekennzeichnet,** daß an den benachbarten Flächen der Teleskopkrone (8) und der herausnehmbaren Krone (2) mittels Funkenerosion gegenüberliegende Nuten ausgebildet werden, daß ein in beide Nuten eingreifender Profilstift als Friktionselement eingesetzt wird, und daß ggf. dessen überstehendes Ende an der Krone (2) bündig abgelängt wird.

9. Zahnersatz nach einem der vorhergehenden Ansprüche, **dadurch gekennzeichnet,** daß an der angrenzenden Fläche zwischen einer Krone oder einer Brücke und einem herausnehmbaren Zahnersatzteil das Geschiebe als quadratischer Block (16) vertikal verlaufend an die Krone oder Brücke angearbeitet ist und das herausnehmbare Ersatzteil den Block (16) mit einer entsprechenden Aussparung (17) umgreift, und daß an den Wandungen des Blokkes (16) und der angrenzenden Flächen des Zahnersatzteiles vertikale Nuten (6, 7) mittels Funkenerosion ausgearbeitet sind, in die elastische Friktionselemente (5) eingreifen.

10. Zahnersatz nach einem der Ansprüche 2 bis 7, **dadurch gekennzeichnet,** daß das Geschiebe als quadratische Aussparung (18) vertikal verlaufend in die Krone oder Brücke eingearbeitet ist und das herausnehmbare Zahnersatzteil mit einem an ihm angeformten Block (19) in die Aussparung (18) eingreift, wobei angrenzende Flächen überin Nuten (6, 7) eingesetzte Friktionselemente (5) reibschlüssig verbunden sind.

11. Zahnersatz nach einem der Ansprüche 1 bis 7, **dadurch gekennzeichnet,** daß das von einem Zahnersatzteil (1) übergriffene Element ein waagerechter Steg (20) ist.

12. Zahnersatz nach Anspruch 1, **dadurch gekennzeichnet,** daß zwischen einem Primärteil (22) und einem herausnehmbaren Sekundärteil (23) eine Verbindung mittels elastischer Friktionselemente (5) besteht, die in Nuten (7) eingreifen.

**Claims**

1. Dental prosthesis having a frictional connection between an element fixed in the mouth, especially a telescope crown, a bridge or the like, and a removable dental-prosthesis component placed on it, characterised in that a vertical groove (6, 7) is formed in each of the adjacent surfaces of the telescope crown (8) and of the crown (2) of the dental-prosthesis component (1) that fits over the telescope crown (8), and that the two grooves (6, 7) are immediately opposite one another and are connected by a resilient friction element (5) that engages the two grooves (6, 7).

2. Dental prosthesis according to claim 1, characterised in that vertical grooves, which are immediately opposite one another and are connected by an engaging resilient friction element, are formed in each of the adjacent surfaces between a crown or bridge and a push-fit member.

3. Dental prosthesis according to claim 1 or 2, characterised in that the friction element is a polyamide profile pin (5, 13, 14), the cross-section of which matches the cross-section of the space formed by the two grooves.

4. Dental prosthesis according to one of the preceding claims, characterised in that both grooves (6, 7) have the same cross-sectional shape.

5. Dental prosthesis according to one of claims 1 to 3, characterised in that the grooves (6, 12) have different cross-sections.

6. Dental prosthesis according to claim 4 or 5, characterised in that the cross-section is trapezoid and/or triangular and/or semi-circular or/and swallow-tailed.

7. Dental prosthesis according to one of the preceding claims, characterised in that the length of the groove in the crown (2) of the dental-prosthesis component (1) is greater than that of the groove in the telescope crown (8) on the tooth stump (10).

8. Process for the production of a frictional connection between a telescope crown fixed in the mouth and a removable dental-prosthesis component placed on it, characterised in that grooves, opposite one another, in the adjacent surfaces of the telescope crown (8) and the removable crown (2) are formed by spark erosion, that a profile pin that engages the two grooves is used as the friction element and that, if necessary, its projecting end is cut off flush with the crown (2).

9. Dental prosthesis according to one of the preceding claims, characterised in that at the adjacent surface between a crown or a bridge and a removable dental-prosthesis component the push-fit member, in the form of a square block (16), is formed on the crown or bridge in such a manner that it extends vertically, and a corresponding recess (17) in the removable prosthesis component fits around the block (16), and that vertical grooves (6, 7) are formed by spark erosion in the walls of the block (16) and the adjacent surfaces of the dental-prosthesis component, which grooves are engaged by resilient friction elements (5).

10. Dental prosthesis according to one of claims 1 to 8, characterised in that the push-fit member is worked into the crown or bridge in the form of a square recess (18) in such a manner that it extends vertically, and a block (19) integrally formed with the removable dental-prosthesis component engages the recess (18), adjacent surfaces being connected in a frictional manner by way of friction elements (5) inserted into grooves (6, 7).

11. Dental prosthesis according to one of claims 1 to 8, characterised in that the element over which one dental-prosthesis component (1) fits is a horizontal bar (20).

12. Dental prosthesis according to claim 1, characterised in that a primary component (22) and a removable secondary component (23) are connected by resilient friction elements (5) that engage grooves (7).

**Revendications**

1. Prothèse dentaire à fixation par friction entre une couronne télescopique (8), un bridge, etc... fixé en bouche et une couronne (2) d'une prothèse amovible, posée par-dessus, caractérisée en ce qu'une gorge (6, 7) verticale est formée dans chacune des surfaces adjacentes de la couronne télescopique (8) et de la couronne (2) de la prothèse (1), recouvrant cette couronne télescopique (8), ces deux gorges (6, 7) étant en face l'une de l'autre et contiguës et étant reliées par un élément (5) élastique monobloc de friction, qui y est engagé.

2. Prothèse dentaire selon la revendication 1, caractérisée en ce qu'il est formé, dans chacune des surfaces adjacentes d'une couronne ou d'un bridge et d'un élément de jonction, des gorges verticales qui se font exactement vis-à-vis et qui sont reliées par un élément élastique à friction, qui y est engagé.

3. Prothèse dentaire selon l'une des revendications 1 et 2, caractérisée en ce que l'élément à friction est une cheville profilée (5, 13, 14) en polyamide, dont la section droite est adaptée à celle de la cavité formée par les deux gorges.

4. Prothèse dentaire selon l'une des revendications précédentes, caractérisée en ce que les deux gorges (6, 7) ont la même forme en section droite.

5. Prothèse dentaire selon l'une des revendications 1 à 3, caractérisée en ce que les gorges (6, 12) ont des sections droites différentes.

6. Prothèse dentaire selon l'une des revendications 4 ou 5, caractérisée en ce que la section droite est trapézoïdale et/ou triangulaire et/ou semi-circulaire et/ou en queue d'aronde.

7. Prothèse dentaire selon l'une des revendications précédentes, caractérisée en ce que la longueur de la gorge est plus grande dans la couronne (2) de la prothèse (1) que dans la couronne télescopique (8) qui se trouve sur le moignon (10).

8. Procédé d'exécution d'un assemblage par friction entre une couronne télescopique (8) fixée en bouche et une couronne (2) amovible placée sur elle, caractérisé en ce que l'on forme par électro-érosion des gorges qui se font vis-à-vis dans les surfaces adjacentes de la couronne télescopique (8) et de la couronne (2) amovible ; on insère une cheville profilée constituant un élément à friction s'engageant dans les deux gorges ; et l'on coupe à ras de la couronne (2) l'extrémité dépassante de cette cheville.

9. Prothèse dentaire selon l'une des revendications précédentes, caractérisée en ce que, sur les surfaces adjacentes d'une couronne ou d'un bridge et d'une couronne amovible, l'élément de jonction est façonné sur cette couronne ou ce bridge à la forme d'une tête (16) rectangulaire orientée verticalement, et la prothèse amovible enserre cette tête (16) dans un évidement (17) complémentaire et en ce que des gorges (6, 7) verticales, dans lesquelles des éléments élastiques (5) à friction sont engagés, sont façonnées par électro-érosion dans les parois de ladite tête (16) et dans les parois adjacentes de la prothèse amovible.

10. Prothèse dentaire selon l'une des revendications 2 à 7, caractérisée en ce que l'élément de jonction est façonné dans la couronne ou le bridge sous la forme d'un évidement (18) à section rectangulaire, orienté verticalement et une tête (19) formée sur la prothèse amovible est engagée dans cet évidement (18), les surfaces adjacentes étant assemblées par friction au moyen d'éléments (5) à friction insérés dans les gorges (6, 7).

11. Prothèse dentaire selon l'une des revendications 1 à 7, caractérisée en ce que l'élément qui est recouvert par la prothèse (1) est une entretoise (20) horizontale.

12. Prothèse dentaire selon la revendication 1, caractérisée en ce qu'une pièce primaire (22) et une pièce secondaire (23) amovible sont reliées au moyen d'éléments (5) élastiques et à friction, qui sont engagés dans les gorges (7).

Fig. 1

Fig. 2

Fig. 3

Fig. 4

Fig. 5

Fig. 6

Fig. 7

13

14

5

15

Fig. 8

6

6

17

Fig. 9

16

7

7

Fig. 10

5

17

5

16

Fig. 11

Fig. 12

Fig. 13

Fig. 14

Fig. 15

Fig. 16

EP 0 325 734 B1

Fig.17

Fig.19

Fig.18

Fig.20

10